(19) Europäisches Patentamt
European Patent Office
Office européen des brevets

(11) EP 1 852 461 A1

(12) **EUROPÄISCHE PATENTANMELDUNG**

(43) Veröffentlichungstag:
**07.11.2007 Patentblatt 2007/45**

(51) Int Cl.:
***C08J 7/04*** *(2006.01)*

(21) Anmeldenummer: **07008472.8**

(22) Anmeldetag: **26.04.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **04.05.2006 DE 102006020712**

(71) Anmelder: **Mitsubishi Polyester Film GmbH**
**65203 Wiesbaden (DE)**

(72) Erfinder:
- **Konrad, Matthias, Dr.**
**65719 Hofheim (DE)**
- **Jesberger, Martin, Dr.**
**55122 Mainz (DE)**
- **Hilkert, Gottfried, Dr.**
**55291 Saulheim (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(54) **Beschichtete Polyesterfolie mit hoher Oberflächenspannung und niedriger Reibung**

(57) Die Erfindung betrifft eine beschichtete Polyesterfolie mit hoher Oberflächenspannung und sehr niedriger Reibung. Diese Eigenschaften werden mit einer polymeren Beschichtung erreicht, bei der das Polymer sowohl hydrophile als auch hydrophobe Abschnitte enthält.

**Figur 1**

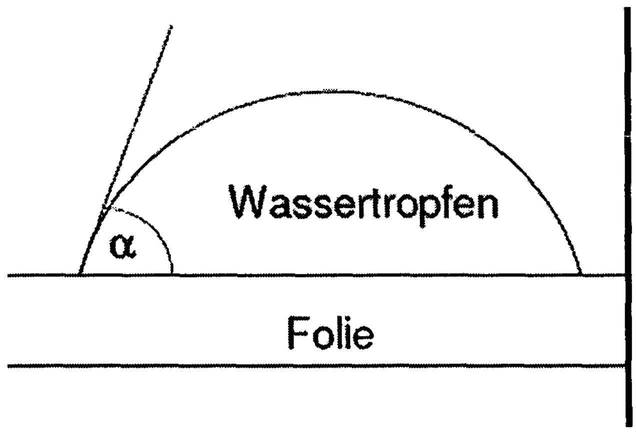


EP 1 852 461 A1

## Beschreibung

Die Erfindung betrifft eine beschichtete Polyesterfolie mit hoher Oberflächenspannung und sehr niedriger Reibung. Diese Eigenschaften werden mit einer polymeren Beschichtung erreicht, bei der das Beschichtungspolymer sowohl hydrophile als auch hydrophobe Abschnitte enthält.

Die Industrie hat einen hohen Bedarf an Polyesterfolien, die zum einen gute Gleiteigenschaften und zum anderen eine hohe Oberflächenspannung aufweisen. Die Gleiteigenschaften sind z. B. wichtig, um einzelne Folienlagen gut trennen bzw. entstapeln zu können. Die hohe Oberflächenspannung verbessert beispielsweise die Bedruckbarkeit der Folie, welches insbesondere bei der Verwendung von wasserbasierten Farben von Bedeutung ist.

Hohe Oberflächenspannungen von Folien (gegenüber Wasser), d. h. hydrophile Eigenschaften, können durch verschiedene Verfahren erzielt werden. Mit einer Corona- oder Plasmabehandlung lässt sich die Oberflächenspannung von Polyesterfolie auf größer 50 mN/m steigern, verglichen mit 43 mN/m bei einer unbehandelten Polyesterfolie. Die Verwendung von Beschichtungen kann zu sehr hohen Oberflächenspannungen von bis zu 70 mN/m führen.

Niedrige Reibungswerte erhält man beispielsweise durch den Zusatz von bestimmten Additiven, z. B. großen Partikeln, zum Polyester oder ebenfalls durch eine Beschichtung. Sehr niedrige Reibungswerte werden mit Folien mit Beschichtungen erreicht, die Silikon oder Wachs enthalten. Solche Beschichtungen führen allerdings zu einer niedrigen Oberflächenspannung der Folie.

Eine Polyesterfolie, die gleichzeitig eine hohe Oberflächenspannung und sehr niedrige Reibungswerte aufweist, war bisher nicht bekannt.

Bekannt sind hydrophile Beschichtungen basierend auf wasserlöslichen Polymeren. Auch Tenside werden für hydrophile Antibeschlag-Beschichtungen genutzt, da sie die Oberflächenspannung des Wassers herabsetzen.

Aus US-A-4,467,073 ist eine transparente Antibeschlag-Beschichtung bekannt. Die Zusammensetzung enthält a) Polyvinylpyrrolidon, Polydimethylacrylamid oder ein Polyvinylpyrrolidon-Copolymer mit einem $\alpha$-Olefin, b) ein Polyisocyanat-Präpolymer, c) ein Tensid und d) ein organisches Lösemittel. Der Nachteil dieser Beschichtungszusammensetzung liegt in der Verwendung eines organischen Lösemittels, speziell wenn der Beschichtungsschritt in die Folienherstellung einbezogen werden soll (in-line). Ein weiterer Nachteil ist die beschriebene Aushärtezeit von 24 Stunden und länger, die sich negativ auf die Wirtschaftlichkeit auswirkt.

Die US-A-5,262,475 beschreibt eine hydrophile Zusammensetzung, die Polyvinylpyrrolidon, Polyvinylalkohol und als Vernetzer Melamin, eine Mineralsäure oder eine starke organische Säure enthält. Weiterhin kann die Beschichtungslösung Additive wie Kettenverlängerer, Schaumregulierer oder Tenside enthalten. Der Feststoffgehalt der Beschichtung beträgt 5 bis 50 Gew.-%. Die Vernetzung zu harten klaren Schichten erfordert Temperaturen von mindestens 75 °C, in den Beispielen werden Temperaturen zwischen 130 und 150 °C verwendet. Damit sind diese Beschichtungen für die In-Line-Aufbringung auf Polyesterfolien ungeeignet, da die Komponenten bereits beim Trocknen bzw. beim Strecken vernetzen und die Beschichtung somit einreißt und damit zu Abrissen der Folie führen kann. Auch die Tatsache, dass die vernetzten Beschichtungen als hart beschrieben werden, lässt ihre Anwendung auf flexiblen Substraten ungeeignet erscheinen.

In-line-Sllikonisierung von Polyesterfolie wird z. B. beschrieben in EP-B-0 536 766. Solche Folien haben zwar eine niedrige Reibung, aber gleichzeitig auch eine sehr niedrige Oberflächenspannung und erfüllen somit nicht die gestellten Anforderungen. Weiterhin ist nachteilig, dass die genannten Beschichtungen reaktive Systeme sind und deshalb schnell verarbeitet werden müssen.

Aufgabe der vorliegenden Erfindung war es, eine Polyesterfolie bereitzustellen, die sich sowohl durch eine hohe Oberflächenspannung von größer 53 mN/m als auch durch niedrige Reibungswerte auszeichnet. Die Haftreibung soll kleiner gleich 0,25 sein und die Gleitreibung kleiner gleich 0,2.

Diese Aufgabe wird gelöst durch eine biaxial orientierte Polyesterfolie, die mit einem Polymer beschichtet ist, das sowohl hydrophile als auch hydrophobe Abschnitte enthält.

Bevorzugt ist das Beschichtungspolymer ein Polydiorganosiloxan der Formel (I)

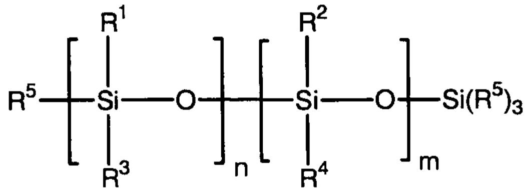

(I)

worin

$R^2$und $R^4$ gleich oder verschieden sind und $-(R^6-O)_q-H$, $-(R^6-O)_q-C(O)-CR^5=CH_2$, $-(R^6-C(O)O)_q-H$, $C_1$-$C_6$-Alkylacrylat, $C_1$-$C_6$-Alkyimethaerylat, Poly($C_1$-$C_6$)-alkylacrylat, Poly($C_1$-$C_6$)-alkylmethacrylat, $-R^6-OH$, $-R^6-NH_2$, $-R^6-NH-$ C (O)-$R^5$ oder $R^5$ bedeuten und

$R^1$ und $R^3$ gleich oder verschieden sind und einen linearen oder verzweigten $C_1$-$C_8$-, bevorzugt $C_1$-$C_6$-, besonders bevorzugt $C_1$-$C_3$-Alkylrest bedeuten oder die Bedeutung von $R^2$ und $R^4$ haben und

$R^5$ einen linearen oder verzweigten $C_1$-$C_8$-, bevorzugt $C_1$-$C_6$-, besonders bevorzugt $C_1$-$C_3$-Alkylrest bedeutet und

$R^6$ einen linearen oder verzweigten $C_1$-$C_{18}$-, bevorzugt $C_2$-$C_{10}$-, besonders bevorzugt $C_2$-$C_6$-Alkylenrest bedeutet und

n und m unabhängig voneinander eine Zahl von 5 bis 1000, bevorzugt 10 bis 500, besonders bevorzugt 20 bis 100 ist und
wobei die Summe aus n und m eine Zahl von 10 bis 100000, bevorzugt 100 bis 50000, besonders bevorzugt 1000 bis 10000 ist und

q eine Zahl von 10 bis 10000, bevorzugt 100 bis 5000, besonders bevorzugt 200 bis 3000 ist

oder ein Polyacrylat der Formel (II)

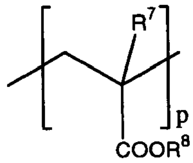
(II)

worin

$R^8$

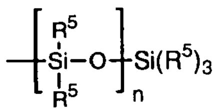

bedeutet, wobei die $R^5$ gleich oder verschieden sind und wie n die oben angegebenen Bedeutungen haben,

$R^7$ H oder $CH_3$ bedeutet und

p eine Zahl von 10 bis 100000, bevorzugt 100 bis 50000, besonders bevorzugt 1000 bis 10000 ist.

Bevorzugt sind Polymere der Formel (I), wobei die Substituenten die folgende Bedeutung haben:

$R^2$ und $R^4$ sind gleich oder verschieden und bedeuten $-(R^6-O)_q-H$, $-(R^6-O)_q-C(O)-CR^5=CH_2$, $-(R^6-C(O)O)_q-H$, $C_1$-$C_3$-Alkylacrylat, $C_1$-$C_3$-Alkylmethacrylat, Poly($C_1$-$C_3$)-alkylacrylat, Poly($C_1$-$C_3$)-alkylmethacrylat, $-R^6-OH$ oder $R^5$,
wobei
$R^5$ ein linearer oder verzweigter $C_1$-$C_3$-Alkylrest,
$R^6$ ein linearer oder verzweigter $C_2$-$C_6$-Alkylenrest und
q eine Zahl von 100 bis 5000 ist,

$R^1$ und $R^3$ sind gleich oder verschieden und bedeuten einen linearen oder verzweigten $C_1$-$C_3$-Alkylrest und

Summe aus n und m bedeutet eine Zahl von 100-50000.

Besonders bevorzugt sind Polymere der Formel (I), wobei die Substituenten die folgende Bedeutung haben:

$R^2$und $R^4$ sind gleich oder verschieden und sind entweder ausgewählt aus $-(R^6-O)_q-H$, $C_1$-$C_3$-Alkylacrylat, $C_1$-$C_3$-Alkylmethacrylat, Poly($C_1$-$C_3$)-alkylacrylat, Poly($C_1$-$C_3$)-alkylmethacrylat und $(R^5)_3$-Si-
oder
$-(R^6-O)_q-H$, $-(R^6-C(O)O)_q-H$, $-R^6-OH$ und $(R^5)_3$-Si-
wobei
$R^5$ ein linearer oder verzweigter $C_1$-$C_3$-Alkylrest,

$R^6$ ein linearer oder verzweigter $C_2$-$C_6$-Alkylen-Rest und
q eine Zahl von 100 bis 5000 ist,
$R^1$ und $R^3$ sind gleich und bedeuten einen Methylrest.

Beispielweise handelt es sich also bei dem Beschichtungspolymer um ein Polydialkylsiloxan mit funktionellen Gruppen wie (Poly)Ethern, (Poly)Estern, (Poly)Acrylaten, Alkoholen, Carbonsäuren, Aminen oder Amiden oder um ein silikonmodifiziertes, OH-funktionelles Polyacrylat. Bevorzugt wird ein polyether-, polyester-, acryl- und/oder hydroxy-modifiziertes Polydimethyl-, Polydialkyl- oder Polymethylalkylsiloxan eingesetzt. Besonders bevorzugt ist ein polyethermodifiziertes, acryl-funktionelles Polydimethylsiloxan oder ein polyether-polyestermodifiziertes, hydroxyfunktionelles Polydimethylsiloxan.

Zwecks Aufbringung auf die erfindungsgemäße Folie wird das Beschichtungspolymer in einem Lösungsmittel, bevorzugt Wasser, gelöst. Die Konzentration des Beschichtungspolymers in der Beschichtungslösung beträgt - je nach Art der verwendeten Beschichtungstechnologie - 0,5 bis 5,0 Gew.-%, bevorzugt 1,0 bis 4,0 Gew.-%, besonders bevorzugt 1,5 bis 3,5 Gew.-% (immer bezogen auf die Masse der Beschichtungsiösung).

Optional kann die Beschichtungslösung anorganische und/oder organische Partikel enthalten, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Titandioxid, Kaolin oder vernetzte Polystyrol- oder Arcrylat-Partikel. Der mittlere Durchmesser ($d_{50}$) solcher Partikel liegt zweckmäßigerweise zwischen 0,05 und 3,0 $\mu$m, bevorzugt zwischen 0,1 und 2,5 $\mu$m und besonders bevorzugt zwischen 0,15 und 2,0 $\mu$m. Sofern solche Partikel eingesetzt werden, sind sie in der Beschichtungslösung zu 0,05 bis 2,0 Gew.-%, bevorzugt 0,1 bis 1,5 Gew.-%, besonders bevorzugt 0,1 bis 1,0 Gew.-% vorhanden (immer bezogen auf die Masse der Beschichtungslösung).

Optional kann die Beschichtung noch ein Polymer oder Oligomer enthalten, das die Anbindung der anderen Komponenten an die Polyesteroberfläche verbessert (haftvermittelndes Polymer). Solche Polymere werden bevorzugt in Form einer wässrigen Lösung oder Dispersion eingesetzt. Geeignete Polymere dieser Art sind z. B. Acrylate wie sie beispielsweise beschrieben sind in der WO 94/13476, Polyurethane, Butadiencopolymere mit Acrylnitril oder Methylmethacrylat, Methacrylsäure oder deren Ester. Geeignete Oligomere sind z. B. Aminosiloxane, die als Dispersion, die in situ aus Aminosilanen hergestellt werden kann, eingesetzt werden. Sofern solche haftvermittelnden Polymere eingesetzt werden, sind sie in der Beschichtungslösung zu 0,5 bis 5,0 Gew.-%, bevorzugt 0,5 bis 4,0 Gew.-%, besonders bevorzugt 0,5 bis 3,0 Gew.-% vorhanden (immer bezogen auf die Masse der Beschichtungslösung).

Überraschenderweise führt die Beschichtung von Polyesterfolie mit den Polymeren gemäß Formel (I) und/oder (II) zu einer hohen Oberflächenspannung, d. h. überraschenderweise zu einer hydrophilen Oberfläche und sehr niedriger Reibung. Überraschend ist dies insbesondere deswegen, weil von den genannten Polymeren bekannt ist, dass sie die Reinigungsfähigkeit eines Lackes dadurch verbessern, dass sie die Oberfläche hydrophobieren, also eigentlich das Gegenteil von dem bewirken, was sie in der vorliegenden Erfindung leisten.

Die Oberflächenspannung der Folie ist größer gleich 53 mN/m.

Die Haftreibung der beschichteten Seite der Folie gegen die unbeschichtete Seite ist kleiner gleich 0,25.

Die Gleitreibung der beschichteten Seite der Folie gegen die unbeschichtete Seite ist kleiner gleich 0,2.

Das Trockengewicht der Beschichtung liegt zwischen 0,01 und 0,3 g/$m^2$.

<u>Trägerfolie</u>

Die Trägerfolie für die Beschichtung enthält bevorzugt mindestens 70 Gew.-% thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethylcyclohexan und Terephthalsäure [= Poly(1,4-cyclohexandimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. In einer bevorzugten Ausführungsform besteht die Trägerfolie zu mindestens 90 Gew.-% aus Polyethylenterephtalat. Die restlichen Anteile stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1 ,3-diol, Butan-1,4-diol, Pentan-1,5-diol und Hexan-1,6-diol) oder verzweigte aliphatische Glykole mit bis zu 6 Kohlenstoffatomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren, beispielsweise Naphthalin-1,4- oder -1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$)-Alkandisäuren besonders geeignet, wobei der Alkanteil geradkettig oder verzweigt sein kann.

Die Herstellung der Polyester kann z. B. nach dem Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Dicke der Trägerfolie kann innerhalb bestimmter Grenzen variieren. Sie liegt vorteilhaft im Bereich von 10 bis 350 $\mu$m, insbesondere von 10 bis 300 $\mu$m, vorzugsweise von 10 bis 250 $\mu$m.

Die Trägerfolie, auf die die Beschichtung aufgebracht wird, kann - wie beschrieben - einschichtig sein, sie kann aber auch zweischichtig aus einer Basisschicht (B) und einer Deckschicht (A) oder dreischichtig aus einer Basisschicht (B) und zwei Deckschichten (A) und (A' bzw. C) aufgebaut sein. Die für den mehrschichtigen Aufbau notwendigen zusätzlichen Schichten können aus den gleichen Polyesterrohstoffen gefertigt sein wie sie oben für die Trägerfolie beschrieben sind.

Die Trägerfolie kann transparent, weiß, opak, glänzend oder matt sein. Diese verschiedenen optischen Eigenschaften erreicht man beispielsweise durch die Zugabe von unterschiedlichen Mengen an Additiven wie Calciumcarbonat, amorpher Kieselsäure oder Titandioxid. Diese Additive können sowohl in der Basisschicht (bei Ein- oder Mehrschichtfolien) als auch in den eventuell vorhandenen Deckschichten einer Mehrschichtfolie enthalten sein.

Herstellungsverfahren

Die Erfindung betrifft auch ein Verfahren zur Herstellung der erfindungsgemäßen Polyesterfolie nach dem an sich aus der Literatur ("Handbook of Thermoplastic Polyesters, Ed. S. Fakirov, Wiley-VCH, 2002" oder im Kapitel "Polyesters, Films" in der "Encyclopedia of Polymer Science and Engeneering, Vol. 12, John Wiley & Sons, 1988") bekannten Extrusionsverfahren.

Zunächst wird, wie beim Extrusionsverfahren üblich, das Polymere bzw. die Polymermischung für die Folie in einem Extruder komprimiert und verflüssigt, wobei die gegebenenfalls als Zusätze vorgesehenen Additive bereits im Polymer bzw. in der Polymermischung enthalten sein können. Die Schmelze wird dann durch eine Flachdüse (Breitschlitzdüse) gepresst, und die ausgepresste Schmelze wird auf einer oder mehreren gekühlten Abzugswalzen abgezogen, wobei die Schmelze abkühlt und sich zu einer Vorfolie verfestigt. Im Falle einer Mehrschichtfolie werden die Polymere der einzelnen Schichten aufgeschmolzen und in einer Mehrschichtdüse zusammengebracht und dann als mehrschichtige Vorfolie aus der Flachdüse extrudiert.

Die biaxiale Streckung wird im Allgemeinen sequenziell durchgeführt. Dabei wird die Vorfolie vorzugsweise zuerst in Längsrichtung (d. h. in Maschinenrichtung = MD-Richtung) und anschließend in Querrichtung (d. h. senkrecht zur Maschinenrichtung = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 80 bis 130 °C und die Querstreckung im Bereich von 90 bis 150 °C durchgeführt. Das Längsstreckverhältnis liegt allgemein im Bereich von 2,5:1 bis 5:1, bevorzugt von 3:1 bis 4,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie über eine Zeitdauer von etwa 0,1 bis 10 s bei einer Temperatur im Bereich von 150 bis 250 °C gehalten. Anschließend wird die Folie in üblicher Weise aufgewickelt.

Nach der biaxialen Streckung kann die nicht beschichtete Oberfläche der Folie nach einer der bekannten Methoden corona- oder flammbehandelt werden. Die Behandlungsintensität wird so eingestellt, dass sich eine Oberflächenspannung im Bereich von über 45 mN/m einstellt.

Beschichtung

Die erfindungsgemäße Beschichtung wird zweckmäßigerweise während des Folienherstellprozesses vor der Querstreckung aufgebracht. Um eine gute Benetzung der Polyesterfolie mit der bevorzugt wässrigen Lösung zu erreichen, wird die Oberfläche bevorzugt zunächst coronabehandelt. Die Beschichtung kann dann mit einem gängigen geeigneten Verfahren wie mit einem Schlitzgießer oder einem Sprühverfahren aufgetragen werden. Besonders bevorzugt ist die Aufbringung der Beschichtung mittels des "Reverse gravure-roll coating"-Verfahrens (s. Adhäsion, 1977, 189 ff., Hugo Klein), bei dem sich die Beschichtung äußerst homogen mit Antragsgewichten zwischen 1,0 und 5 $g/m^2$ auftragen lässt. Ebenfalls bevorzugt ist die Auftragung durch das Meyer-Rod-Verfahren (s. E. D. Cohen, E. B. Gutoff, Coating Process Survey, Kirk Othmer Encyclopedia of Chemical Technology, 5th Ed., John Wiley & Sons, Inc. NY, 2002), mit dem sich größere Beschichtungsstärken erzielen lassen. Die Beschichtung auf der fertigen Folie weist Trockengewichte von 0,01 bis 0,3 $g/m^2$, bevorzugt 0,01 bis 0,25 $g/m^2$, auf.

Bei der Herstellung der erfindungsgemäßen Folie ist gewährleistet, dass das Verschnittmaterial (Regenerat) in einer Menge im Bereich von bis zu 70 Gew.-%, bezogen auf das Gesamtgewicht der Folie, wieder der Extrusion zugeführt werden kann, ohne dass dabei die physikalischen Eigenschaften der Folie nennenswert negativ beeinflusst werden, insbesondere nicht ihr optisches Erscheinungsbild.

Die nachstehende Tabelle (Tabelle 1) fasst die wichtigsten erfindungsgemäßen Eigenschaften der Polyesterfolie noch einmal zusammen.

**Tabelle 1**

| | bevorzugt | besonders bevorzugt | ganz besonders bevorzugt | Einheit |
|---|---|---|---|---|
| Oberflächenspannung | > 53 | > 54 | > 55 | mN/m |
| Haftreibung | < 0,25 | < 0,22 | < 0,20 | |
| Gleitreibung | < 0,20 | < 0,18 | < 0,16 | |
| Trockengewicht der Beschichtung | 0,01-0,3 | 0,01-0,25 | 0,01-0,1 | $g/m^2$ |

Um die Eigenschaften der Polyesterfolie zu testen, wurde diese mit den folgenden Messmethoden charakterisiert:

**Oberflächenspannung**

Die Oberflächenspannung der Folie wurde mit der Kontaktwinkelmethode gemessen. Der Kontaktwinkel $\alpha$ gegenüber Wasser (siehe Figur 1) wurde gemessen und als Maß für die Hydrophilie/Oberflächenspannung der Folienoberfläche benutzt. Je kleiner der Kontaktwinkel $\alpha$ ist, desto größer ist die Hydrophilie/Oberflächenspannung der Folienoberfläche. Die Messung wurde durchgeführt an einem Goniometer G1 der Firma Krüss, Hamburg, DE.

**Reibung**

Die Reibung wurde nach DIN 53375 bestimmt. Die Gleitreibungszahl wurde 14 Tage nach der Produktion gemessen.

**SV-Wert (Standard Viscosity)**

Die Standardviskosität SV (DCE) wird, angelehnt an DIN 53726, bei 25 °C in Dichloressigsäure gemessen. Die intrinsische Viskosität (IV, gemessen in dl/g) von Polyethylenterephthalat berechnet sich wie folgt aus der Standardviskosität

$$IV = [\eta] = 6{,}907 \cdot 10^{-4}\ SV\ (DCE) + 0{,}063096\ [dl/g]$$

Im Folgenden wird die Erfindung anhand von Beispielen näher erläutert.

**Beispiel 1**

Zur Herstellung der Beschichtungslösung wurden folgende Komponenten in Wasser gelöst:

3,0 Gew.-% polyethermodifiziertes acryl-funktionelles Polydimethylsiloxan (®BYK-Silclean 3710, BYK-Chemie GmbH, Wesel, DE)

Aus Polyethylenterephthalat (Typ 4023, Invista, DE) wurde eine Schmelze hergestellt und diese durch eine Breitschlitzdüse auf eine auf etwa 20 °C gehaltene Gießwalze extrudiert, wo sie zu einer 160 µm dicken unorientierten Folie erstarrte. Die unorientierte Folie wurde im Streckverhältnis von 3,8:1 längsgestreckt, wobei sie auf einer Temperatur von 115 °C gehalten wurde. Die längsgestreckte Folie wurde in einem Coronaentladegerät coronabehandelt (55 mN/m) und danach durch Reversgravurbeschichtung (Zellvolumen ca. 6 $cm^3/m^2$) mit der oben beschriebenen Lösung aus Polyether modifiziertem acryl-funktionellem Polydimethylsiloxan beschichtet (2 $g/m^2$). Die längsgestreckte, coronabehandelte, beschichtete Folie wurde bei einer Temperatur von 100 °C getrocknet. Danach wurde die Folie im Streckverhältnis 3,8:1 quergestreckt, wobei man eine biaxial gestreckte Folie erhielt. Die biaxial gestreckte Folie wurde bei 230 °C thermofixiert. Die Endfoliendicke betrug 12 µm. Das Trockengewicht der Beschichtung betrug ca. 0,015 $g/m^2$.

Die Folie zeigte sehr niedrige Reibwerte und eine hohe Oberflächenspannung (siehe Tabelle 2).

**Beispiel 2**

Analog Beispiel 1 wurde eine Polyesterfolie hergestellt, wobei jedoch folgende Beschichtungslösung verwendet wurde:

| | |
|---|---|
| 2,0 Gew.-% | polyethermodifiziertes acryl-funktionelles Polydimethylsiloxan (®BYK-Silclean 3710, BYK-Chemie GmbH, Wesel, DE) |
| 1,0 Gew.-% | Acrylat-Copolymer, bestehend aus 60 Gew.-% Methylmethacrylat, 35 Gew.-% Ethylacrylat und 5 Gew.-% N-Methylolacrylamid |
| 97 Gew.-% | Wasser |

Das Trockengewicht der Beschichtung betrug ca. 0,02 $g/m^2$ bei einer Dicke der Trägerfolie von 23 µm.

Wie Beispiel 1 zeigte auch diese Folie sehr niedrige Reibwerte und eine hohe Oberflächenspannung. Gegenüber Beispiel 1 hat sich die Haftung der Beschichtung auf der Folie verbessert.

**Beispiel 3**

Analog Beispiel 1 wurde eine Polyesterfolie hergestellt, wobei folgende Beschichtungslösung verwendet wurde:

3,0 Gew.-% polyethermodifiziertes acryl-funktioneiies Polydimethylsiloxan (®BYK-Silclean 3710, BYK-Chemie GmbH, Wesel, DE)
1,0 Gew.-% Siliziumdioxid (Nalco 1030, US)
96 Gew.-% Wasser

Das Trockengewicht der Beschichtung betrug ca. 0,06 $g/m^2$ bei einer Dicke der Trägerfolie von 50 µm.

Wie Beispiel 1 zeigte auch diese Folie sehr niedrige Reibungswerte und eine hohe Oberflächenspannung. Gegenüber Beispiel 2 wurde die Reibung der Folie verringert.

**Tabelle 2: Folieneigenschaften**

| | Beispiel 1 | Beispiel 2 | Beispiel 3 |
|---|---|---|---|
| Oberflächenspannung | 58 mN/m | 56 mN/m | 57 mN/m |
| Haftreibung | 0,20 | 0,22 | 0,21 |
| Gleitreibung | 0,16 | 0,18 | 0,17 |

**Patentansprüche**

1. Biaxial orientierte Polyesterfolie, **dadurch gekennzeichnet, dass** sie mit einem Beschichtungspolymer beschichtet ist, das sowohl hydrophile als auch hydrophobe Abschnitte enthält.

2. Polyesterfolie nach Anspruch 1, **dadurch gekennzeichnet, dass** das Beschichtungspolymer ein Polydiorganosiloxan der Formel (I)

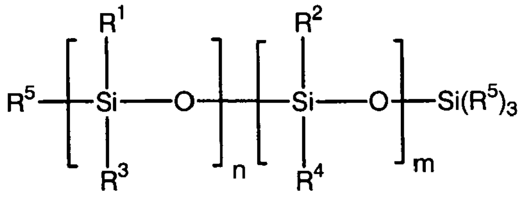

(I)

ist, worin

$R^2$ und $R^4$ gleich oder verschieden sind und $-(R^6\text{-}O)q\text{-}H$, $-(R^6\text{-}O)_q\text{-}C(O)\text{-}CR^5{=}CH_2$, $-(R^6\text{-}C(O)O)_q\text{-}H$, $C_1$-$C_6$-Alkylacrylat, $C_1$-$C_6$-Alkylmethacrylat, Poly($C_1$-$C_6$)-alkylacrylat, Poly($C_1$-$C_6$)-alkylmethacrylat, $-R^6\text{-}OH$, $-R^6\text{-}NH_2$, $-R^6\text{-}NH\text{-}C(O)\text{-}R^5$ oder $R^5$ bedeuten und
$R^1$ und $R^3$ gleich oder verschieden sind und einen linearen oder verzweigten $C_1$-$C_8$-, bevorzugt $C_1$-$C_6$-, besonders bevorzugt $C_1$-$C_3$-Alkylrest bedeuten oder die Bedeutung von $R^2$ und $R^4$ haben und
$R^5$ einen linearen oder verzweigten $C_1$-$C_8$-, bevorzugt $C_1$-$C_6$-, besonders bevorzugt $C_1$-$C_3$-Alkylrest bedeutet und
$R^6$ einen linearen oder verzweigten $C_1$-$C_{18}$-, bevorzugt $C_2$-$C_{10}$-, besonders bevorzugt $C_2$-$C_6$-Alkylenrest bedeutet und
n und m unabhängig voneinander eine Zahl von 5 bis 1000, bevorzugt 10 bis 500, besonders bevorzugt 20 bis 100, ist und wobei die Summe aus n und m eine Zahl von 10 bis 100000,
bevorzugt 100 bis 50000, besonders bevorzugt 1000 bis 10000 ist und
q eine Zahl von 10 bis 10000, bevorzugt 100 bis 5000, besonders bevorzugt 200 bis 3000 ist,

oder ein Polyacrylat der Formel (II)

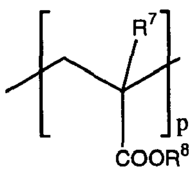

(II)

worin

$R^8$

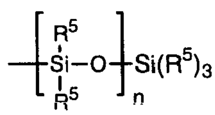

bedeutet, wobei die $R^5$ gleich oder verschieden sind und wie n die oben angegebenen Bedeutungen haben,
$R^7$ H oder $CH_3$ bedeutet und
p eine Zahl von 10 bis 100000, bevorzugt 100 bis 50000, besonders bevorzugt 1000 bis 10000 ist.

**3.** Polyesterfolie nach Anspruch 1 oder 2, **dadurch gekennzeichnet, dass** das Beschichtungspolymer

a) ein Polydialkylsiloxan mit funktionellen Gruppen ist, wobei die funktionellen Gruppen ausgewählt sind aus: (Poly)Ethern, (Poly)Estern, (Poly)Acrylaten, Alkoholen, Carbonsäuren, Aminen und Amiden
oder
b) ein silikonmodifiziertes, OH-funktionelles Polyacrylat ist
oder
eine Mischung aus a) und b) ist.

**4.** Polyesterfolie nach Anspruch 1, 2 oder 3, **dadurch gekennzeichnet, dass** das Beschichtungspolymer anorganische und/oder organische Partikel enthält.

**5.** Polyesterfolie nach Anspruch 4, **dadurch gekennzeichnet, dass** der mittlere Durchmesser ($d_{50}$) der Partikel zwischen 0,05 und 3,0 μm liegt.

**6.** Polyesterfolie nach einem der Ansprüche 1 bis 5, **dadurch gekennzeichnet, dass** die Oberflächenspannung der Folie größer gleich 53 mN/m ist.

**7.** Polyesterfolie nach einem der Ansprüche 1 bis 6, **dadurch gekennzeichnet, dass** die Haftreibung der beschichteten Seite der Folie gegen die unbeschichtet Seite kleiner gleich 0,25 ist.

**8.** Polyesterfolie nach einem der Ansprüche 1 bis 7, **dadurch gekennzeichnet, dass** die Gleitreibung der beschichteten Seite der Folie gegen die unbeschichtet Seite kleiner gleich 0,2 ist.

**9.** Polyesterfolie nach einem der Ansprüche 1 bis 8, **dadurch gekennzeichnet, dass** das Trockengewicht der Beschichtung zwischen 0,01 und 0,3 $g/m^2$ liegt.

**10.** Polyesterfolie nach einem der Ansprüche 1 bis 9, **dadurch gekennzeichnet, dass** die Dicke der zu beschichtenden Polyesterfolie im Bereich von 10 bis 350 μm liegt.

**11.** Polyesterfolie nach einem der Ansprüche 1 bis 10, **dadurch gekennzeichnet, dass** sie einschichtig ist.

**12.** Polyesterfolie nach einem der Ansprüche 1 bis 10, **dadurch gekennzeichnet, dass** sie mehrschichtig ist.

**13.** Polyesterfolie nach einem der Ansprüche 1 bis 12, **dadurch gekennzeichnet, dass** sie transparent, weiß oder opak ist.

**14.** Polyesterfolie nach einem der Ansprüche 1 bis 13, **dadurch gekennzeichnet, dass** sie glänzend oder matt ist.

**15.** Verfahren zur Herstellung einer Folie nach Anspruch 1, **dadurch gekennzeichnet, dass** das Polymere oder die Polymermischung für die Folie in einem Extruder komprimiert und verflüssigt wird und dann durch eine Flachdüse gepresst und die ausgepresste Schmelze auf einer oder mehreren gekühlten Abzugswalzen abgezogen wird, wobei die Schmelze abkühlt und sich zu einer Vorfolie verfestigt, die dann sequeztiell biaxial in Maschinenrichtung und Querrichtung orientiert wird, thermofixiert und anschließend aufgerollt wird, wobei die Folie während der sequenziellen Orientierung mit einem Beschichtungspolymer beschichtet wird, das sowohl hydrophile als auch hydrophobe Abschnitte enthält.

**16.** Verwendung einer Folie nach Anspruch 1 zur Bedruckung.

**17.** Verwendung nach Anspruch 16, zur Bedruckung mit wasserbasierten Farben.

Figur 1

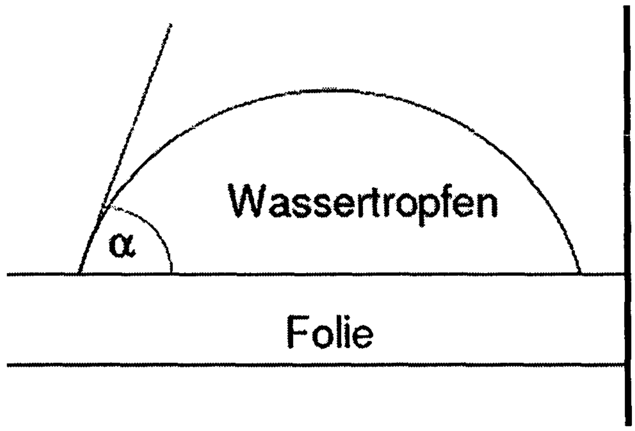

Europäisches Patentamt

# EUROPÄISCHER RECHERCHENBERICHT

Nummer der Anmeldung
EP 07 00 8472

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2003/124338 A1 (INAGAKI MASASHI [JP] ET AL) 3. Juli 2003 (2003-07-03)<br>* Absätze [0068], [0069] *<br>* Beispiel 1 *<br>----- | 1-15 | INV.<br>C08J7/04 |

| RECHERCHIERTE SACHGEBIETE (IPC) |
|---|
| C08J |

Der vorliegende Recherchenbericht wurde für alle Patentansprüche erstellt

2

| Recherchenort | Abschlußdatum der Recherche | Prüfer |
|---|---|---|
| München | 13. August 2007 | Andriollo, Giovanni |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 07 00 8472

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-08-2007

| Im Recherchenbericht angeführtes Patentdokument | Datum der Veröffentlichung | Mitglied(er) der Patentfamilie | Datum der Veröffentlichung |
|---|---|---|---|
| US 2003124338 A1 | 03-07-2003 | KR 20030014587 A | 19-02-2003 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4467073 A
- US 5262475 A
- EP 0536766 B
- WO 9413476 A


### In der Beschreibung aufgeführte Nicht-Patentliteratur


- Handbook of Thermoplastic Polyesters. Wiley-VCH, 2002
- Polyesters, Films. Encyclopedia of Polymer Science and Engeneering. John Wiley & Sons, 1988, vol. 12
- Reverse gravure-roll coating. *s. Adhäsion,* 1977, 189
- **E. D. COHEN ; E. B. GUTOFF.** Coating Process Survey, Kirk Othmer Encyclopedia of Chemical Technology. John Wiley & Sons, Inc, 2002